# EUROPÄISCHE PATENTANMELDUNG

(11) **EP 3 992 309 A1**
(43) Veröffentlichungstag der Anmeldung: **04.05.2022**
(21) Anmeldenummer: 20204857.5
(22) Anmeldetag: 30.10.2020
(51) Int. Cl.: C21B 13/14, C21C 5/28

(54) **HERSTELLUNG VON EISENSCHMELZE**

(71) Anmelder: Primetals Technologies Austria GmbH, 4031 Linz (AT)
(72) Erfinder: Wurm, Johann, 4283 Bad Zell (AT); Millner, Robert, 3382 Loosdorf (AT); Rein, Norbert, 1060 Wien (AT)
(74) Vertreter: Metals@Linz

(57) **Zusammenfassung**

Die Anmeldung betrifft ein Verfahren zur Herstellung einer Eisenschmelze mit einem Kohlenstoffgehalt von 1 - 5 Massen%, Dabei wird Eisenschwamm einer Behandlung unterworfen, die
- Energiezufuhr und Zugabe von Zuschlägen zur Erzeugung einer Schmelze und einer Schlacke, wobei die Energiezufuhr im Wesentlichen aus Elektrizität erfolgt und wobei die Schlacke eine Basizität B2 kleiner 1,3 , bevorzugt kleiner 1,25 , besonders bevorzugt kleiner 1,2 , aufweist,
- Einstellung des Kohlenstoffgehalts in der Schmelze,
- Reduktion zumindest einer Teilmenge der im Eisenschwamm enthaltenen Eisenoxide,
umfasst.

Während und/oder nach der Behandlung wird die Schlacke abgetrennt.

Sie betrifft auch die Herstellung von Stahl aus so einer Eisenschmelze.

## Beschreibung

### Gebiet der Technik

Die Erfindung betrifft ein Verfahren zur Herstellung einer Eisenschmelze unter Verwendung von mittels Direktreduktion mit Reduktionsgas erhaltenem Eisenschwamm.

### Stand der Technik

Der Großteil der derzeitigen Stahlerzeugung erfolgt auf der Hochofenroute mit nachfolgendem Stahlwerk basierend auf dem Sauerstoffaufblasverfahren (LD/BOF). Mit dieser Verfahrensroute kann ein breites Spektrum von Eisenerzen verarbeitet werden, da Gangartanteile in Form von Schlacke mit geringen Eisenverlusten beim Hochofen abgeführt werden können, und im nachgeschalteten BOF hochqualitativer, universell einsetzbarer Rohstahl herstellbar ist.

Ein geringerer Anteil der Stahlerzeugung beruht auf Direktreduktion mittels Reduktionsgas zu Eisenschwamm, auch direct reduced iron DRI genannt, mit nachfolgender Stahlerzeugung mittels Elektrolichtbogenofen (EAF). Dabei muss auf im Vergleich zur Hochofenroute höherwertige Rohstoffe mit geringerem Gangartanteil zurückgegriffen werden, um in einem konventionellen EAF anfallende Schlackemengen beziehungsweise Eisenverluste und Energie- und Rohstoffkosten zu begrenzen. Ein konventioneller EAF benötigt auch einen hohen Metallisierungsgrad des Eisenschwamms. Verfahrenstechnisch bedingt ist die erzielbare Rohstahlqualität auch geringer, beziehungsweise müssen zur Erzielung vergleichbarer Stahlqualitäten aufwändige Nachbehandlungen des im EAF erhaltenen Rohstahls durchgeführt werden.

Zur Verminderung industrieller CO2-Emissionen ist eine Verminderung des Anteils der Hochofenroute an der weltweiten Stahlerzeugung gewünscht, da sie auf Einsatz von Kohle beziehungsweise Koks basiert. Eine Erhöhung des Anteils der Direktreduktion an der weltweiten Stahlerzeugung bietet sich grundsätzlich als Ausgleich an, da dafür auch auf mit weniger CO2-Emissionen behafteten Wegen produziert werden kann - beispielsweise mit Reduktionsgas auf Erdgas- oder Wasserstoffbasis. Die mit dieser Route verbundenen Nachteile gegenüber der Hochofenroute schränken das Potential zur Verlagerung der Stahlproduktion in Richtung Direktreduktion jedoch ein.

### Zusammenfassung der Erfindung

### Technische Aufgabe

Es ist die Aufgabe der Erfindung, Verfahren und Vorrichtung vorzustellen, mit denen die genannten Nachteile vermieden beziehungsweise ihr Ausmaße zumindest vermindert werden können.

### Technische Lösung

Diese Aufgabe wird gelöst durch ein
Verfahren zur Herstellung einer Eisenschmelze mit einem Kohlenstoffgehalt von 1 - 5 Massen%, wobei aus eisenoxidhaltigem Ausgangsmaterial mittels Direktreduktion mit Reduktionsgas erhaltener Eisenschwamm einer Behandlung unterworfen wird,
wobei die Behandlung umfasst:
- Energiezufuhr und Zugabe von Zuschlägen zur Erzeugung einer Schmelze und einer Schlacke, wobei die Energiezufuhr im Wesentlichen aus Elektrizität erfolgt und wobei die Schlacke eine Basizität B2 kleiner 1,3 , bevorzugt kleiner 1,25 , besonders bevorzugt kleiner 1,2 , aufweist,
- Einstellung des Kohlenstoffgehalts in der Schmelze,
- Reduktion zumindest einer Teilmenge der im Eisenschwamm enthaltenen Eisenoxide,
   und wobei während und/oder nach der Behandlung die Schlacke abgetrennt wird.

Das erfindungsgemäße Verfahren ist ein Badprozess, kein Festbettprozess. Es dient dazu, auf Basis von Eisenschwamm aus einem Direktreduktionsverfahren eine dem Produkt eines Hochofens -flüssigem Roheisen - ähnliches Produkt herzustellen. Dieses flüssige Produkt soll einen Kohlenstoffgehalt zwischen 1 - 5 Massen% haben, wobei die beiden Grenzwerte dieses Bereiches mit umfasst sind. Massenprozent Massen% bezeichnen den Massenanteil.
Dazu wird dem Eisenschwamm Energie zugeführt und Zuschläge zugegeben, was zur Bildung einer Schmelze auf Basis des Eisens sowie zur Bildung einer Schlacke auf Basis der im Eisenschwamm enthaltenen Gangart des zu Grunde liegenden Erzes führt. Zuschläge sind beispielsweise Kalkstein und/oder Dolomit, wobei beide unkalziniert oder - bevorzugt - kalziniert sein können, Quarz. Die Schlacke weist eine Basizität B2 kleiner 1,3 , bevorzugt kleiner 1,25 , besonders bevorzugt kleiner 1,2 , auf. Eine derartige Schlacke ist der Schlacke eines Hochofens ähnlich und kann entsprechend genutzt werden, beispielsweise in der Zementindustrie. Je niedriger die Basizität ist, desto weniger Schlackenmenge fällt an, wodurch sich der Betrieb des erfindungsgemäßen Verfahrens auch energetisch günstiger gestaltet.

Als Basizität B2 wird das Verhältnis Calciumoxid zu Siliciumdioxid CaO/SiO₂ in Masseprozent bezeichnet.

Bei der Herstellung der Eisenschmelze wird Eisenschwamm einer Behandlung unterworfen.
Als Quelle des Eisens in der Eisenschmelze kann Eisenschwamm in Kombination mit anderen Eisenträgern - wie beispielsweise Schrott oder Roheisen - verwendet werden, oder es kann nur Eisenschwamm als Quelle des Eisens in der Eisenschmelze verwendet werden.

Der Kohlenstoffgehalt der Schmelze wird auf das gewünschte Ausmaß eingestellt - die aus dem Verfahren resultierende Eisenschmelze soll einen Kohlenstoffgehalt von 1 - 5 Massen% aufweisen, entsprechend erfolgt die Einstellung; beispielsweise durch Zufuhr von Kohlenstoffträgern in die Schmelze und/oder durch Zufuhr von Mitteln zur Verminderung des Kohlenstoffgehaltes in der Schmelze, beispielsweise Sauerstoff.

Die Behandlung umfasst auch Reduktion zumindest einer Teilmenge der im Eisenschwamm enthaltenen Eisenoxide zu metallischem Eisen, so dass in der Schmelze die Menge des metallischen Eisens größer ist als in dem ihr zu Grunde liegenden Eisenschwamm; das geschieht während und/oder nach der Energiezufuhr.

Die Energiezufuhr erfolgt im Wesentlichen aus Elektrizität. Im Wesentlichen ist dabei zu verstehen als zumindest mehr als 50 % der zugeführten Energie, bevorzugt mehr als 65 % der zugeführten Energie, besonders bevorzugt mehr als 80 % der zugeführten Energie.
Speziell mit zunehmendem Anteil von Elektrizität aus Stromerzeugung aus erneuerbaren Energiequellen wird damit die CO2-Bilanz des Verfahrens beziehungsweise eines auf Basis des flüssigen, Roheisen-ähnlichen Produktes hergestellten Stahls verbessert.

Bei der Hochofenroute wird anfallende Schlacke vom Roheisen abgetrennt, beispielsweise indem Roheisen und Schlacke abgestochen werden und diese sich durch die gegenseitige Unlöslichkeit und unterschiedliche Dichte durch die Schwerkraft trennen. Anspruchsgemäß wird während und/oder nach der Behandlung die Schlacke abgetrennt. Die Schmelze wird als flüssiges, Roheisen-ähnliches Produkt mit einem Kohlenstoffgehalt von 1 Massen% - 5 Massen% erhalten. Die Entfernung der Schlacke erfolgt beispielsweise durch Auskippen. Durch die Abtrennung der Schlacke, die auf der im Eisenschwamm enthaltenen Gangart und den Zuschlägen basiert, wird die im eisenoxidhaltigen Ausgangsmaterial enthaltene Gangart entfernt.

Die erfindungsgemäß hergestellte Eisenschmelze mit einem Kohlenstoffgehalt von 1,0 Massen% - 5 Massen% besteht überwiegend aus Eisen - es ist ein flüssiges, Roheisen-ähnliches Produkt; die Bezeichnung flüssiges, Roheisen-ähnliches Produkt wird in dieser Anmeldung synonym zu der Bezeichnung Eisenschmelze für die erfindungsgemäß hergestellte Eisenschmelze verwendet. Das flüssige, Roheisen-ähnliche Produkt mit einem Kohlenstoffgehalt von 1,0 Massen% - 5 Massen% ist aus der Perspektive eines Stahlerzeugungsverfahrens - beispielsweise LD/BOF - einem Roheisen aus einem Hochofen "ähnlich", das heißt, es kann weitgehend so verarbeitet werden wie Roheisen aus einem Hochofen, also mit Ausnahme des Hochofens der Hochofenroute der Stahlerzeugung folgend. Je höher der Kohlenstoffgehalt ist, desto mehr Kühlschrott kann bei nachfolgender Verarbeitung zu Stahl eingesetzt werden; eine höhere Menge Kühlschrott vermindert die CO2-Emissionen pro Mengeneinheit eines aus erfindungsgemäß hergestelltem flüssigen, Roheisen-ähnlichen Produkt produzierten Stahls.
Vorzugsweise beträgt der Kohlenstoffgehalt des flüssigen, Roheisen-ähnlichen Produktes zumindest 1,25 Massen%, besonders bevorzugt zumindest 1,5 Massen%. Vorzugsweise beträgt der Kohlenstoffgehalt des flüssigen, Roheisen-ähnlichen Produktes bis zu 4 Massen%, besonders bevorzugt bis zu 3,5 Massen%, ganz besonders bevorzugt bis zu 3 Massen%.

Bei der Durchführung des erfindungsgemäßen Verfahrens kann es vorteilhaft sein, den Eisenschwamm in ein Gefäß zu chargieren, in dem bereits eine geringe Menge einer Eisenschmelze als Sumpf vorhanden ist; dieser Sumpf kann beispielsweise beim Entleeren des Gefäßes nach einem vorangegangenen Einsatz des erfindungsgemäßen Verfahrens in dem Gefäß zurückbehalten werden, er kann aber auch aus einer anderen Quelle stammen, beispielsweise Roheisen, das beispielsweise aus einem Hochofen stammt.

### Vorteilhafte Wirkungen der Erfindung

Die Erfindung eröffnet die Möglichkeit, ausgehend von Eisenschwamm Stahl ohne Nutzung eines konventionellen EAF-Betriebes industriell effizient und ökonomisch herzustellen. Dabei können die für Roheisen bekannte Routen der Stahlerzeugung genutzt werden.
Konventioneller EAF-Betrieb zur Stahlherstellung wird bei oxidierenden Bedingungen zur Absenkung des Kohlenstoffes mit hoher Temperatur und hoher Basizität betrieben. Ein hoher Metallisierungsgrad und ein geringer Anteil an Gangart im Eisenschwamm sind notwendig, um Eisenverluste durch Eisenoxide in der Schlacke gering zu halten. Daher ist Einsatz von hoch-qualitativen Eisenträgern bei der Produktion des dem konventionellen EAF-Betrieb zuzuführenden Eisenschwammes notwendig - hoch-qualitativ bedeutet dabei, dass wenig Gangart in den Eisenträgern vorhanden ist; je weniger Gangart durch den Eisenschwamm in den EAF eingebracht wird, desto geringer ist die Schlackenmenge im EAF. Je geringer die Schlackenmenge ist, desto weniger Eisen kann als Eisenoxid in die Schlacke verloren gehen. Je höher der Metallisierungsgrad, desto weniger Eisenoxide sind im Eisenschwamm enthalten, weshalb die Gefahr des Verlustes von Eisenoxiden über Schlacke entsprechend vermindert ist.

Beim erfindungsgemäßen Verfahrensablauf ist Kohlenstoff vorhanden; somit kann zumindest eine Teilmenge der im Eisenschwamm enthaltenen Eisenoxide durch Kohlenstoff reduziert werden, weshalb der eingesetzte Eisenschwamm auch mit im Vergleich zu konventionellem EAF-Betrieb niedrigerer Metallisierung zur Anwendung kommen kann. Aufgrund der Reduktion von Eisenoxid sind die Eisenverluste über Eisenoxidanteile in der Schlacke im Vergleich zu einer Verarbeitung von Eisenschwamm in einem konventionellen EAF geringer.

Durch die Anwesenheit von Kohlenstoff in der Schmelze wird auch der Temperaturbereich des Schmelzvorganges, also jener Temperaturbereich, in dem das Roheisen-ähnliche Produkt vom festen in den flüssigen Aggregatzustand wechselt, erniedrigt, weshalb zur Verflüssigung weniger Energiezufuhr benötigt wird. Das bedeutet, dass bei von Eisenschwamm ausgehender Stahlerzeugung unter Nutzung des erfindungsgemäßen Verfahrens vergleichsweise weniger Energieaufwand notwendig ist als bei konventionellem EAF-Betrieb.

Für die Erzeugung des Roheisen-ähnlichen Produktes ist es nicht erforderlich, die Basizität der Schlacke so hoch einzustellen wie beim konventionellen EAF Betrieb, da der Fokus des Verfahrens anders als bei konventionellem EAF-Betrieb nicht auf der Herstellung von Stahl liegt. Entsprechend fällt bei von Eisenschwamm ausgehender Stahlerzeugung unter Nutzung des erfindungsgemäßen Verfahrens auch weniger Schlacke an als bei konventionellem EAF-Betrieb - beziehungsweise kann Eisenschwamm mit einem höheren Anteil an Gangart aus niedrigwertigen Rohstoffen verarbeitet werden bei im Vergleich zu konventionellem EAF-Betrieb vergleichbarer Schlackenmenge. Zu im Vergleich zur konventionellen EAF Route geringeren Schlackenmenge trägt also der Umstand bei, dass das erfindungsgemäße Vorgehen mit geringerer Basizität der Schlacke und damit geringerer Menge von Zuschlägen durchgeführt wird, da der Fokus im Vergleich zur EAF-Route mehr auf Entfernung der Gangart als auf Steigerung der Stahlqualität gerichtet ist. Eine geringere Schlackenmenge bedeutet auch weniger Energiebedarf zum Aufheizen beziehungsweise Schmelzen, da weniger Material aufgeheizt werden muss. Vorzugsweise wird das erfindungsgemäße Verfahren mit einer Basizität B2 Basizität unter 1,3 betrieben, besonders bevorzugt mit einer Basizität B2 unter 1,25, ganz besonders bevorzugt mit einer Basizität B2 unter 1,2.

Unter Nutzung des erfindungsgemäßen Verfahrens kann ein breites Spektrum von Eisenerzen verarbeitet werden, da Gangartanteile in Form von Schlacke mit geringen Eisenverlusten schon bei der Herstellung des flüssigem, Roheisen-ähnlichem Produkt mit einem Kohlenstoffgehalt von 1.0 % - 5 % abgeführt werden. Das flüssige, Roheisen-ähnliche Produkt verarbeitende Schritte bei der Stahlerzeugung sind somit nicht mit der bereits entfernten Schlacke belastet. Im Gegensatz dazu ist ein Eisenschwamm verarbeitender konventioneller EAF-Betrieb mit deutlich größeren Schlackemengen belastet.

Da das flüssige, Roheisen-ähnliche Produkt mit einem Kohlenstoffgehalt von 1,0 Massen% - 5 Massen% aus der Perspektive eines Stahlerzeugungsverfahrens - beispielsweise LD/BOF - weitgehend so verarbeitet werden kann wie Roheisen aus einem Hochofen, kann Stahl mit entsprechenden Qualitäten und universellen Einsatzmöglichkeiten hergestellt werden; diesbezügliche Einschränkungen aufgrund der Nutzung einer konventionellen EAF-Route können so überwunden werden beziehungsweise kann auf aufwändige Nachbehandlungen verzichtet werden.

Nach einer bevorzugten Ausführungsform des Verfahrens wird die Direktreduktion mittels eines zumindest zu 20 Vol%, bevorzugt mehr als 45 Vol%, aus Wasserstoff H2 bestehenden Reduktionsgases durchgeführt.
Je größer der Anteil des Wasserstoffs, desto geringer ist die CO2-Bilanz des erfindungsgemäßen Verfahrens beziehungsweise eines auf Basis des flüssigen, Roheisen-ähnlichen Produktes hergestellten Stahls.

Nach einer vorteilhaften Ausführungsform erfolgt die Direktreduktion in einem Direktreduktionsreaktor und die Behandlung in einem Behandlungsreaktor, wobei Direktreduktionsreaktor und Behandlungsreaktor räumlich voneinander getrennt sind. Mittels einer Transportvorrichtung kann der Eisenschwamm vom Direktreduktionsreaktor zum Behandlungsreaktor transportiert werden.
Eine Anordnung von Direktreduktionsreaktor und Behandlungsreaktor in einer gemeinsamen Vorrichtung, also räumlich nicht voneinander getrennt direkt benachbart, ist ebenfalls möglich.

Nach einer vorteilhaften Ausführungsform erfolgt die Energiezufuhr über einen elektrischen Lichtbogen.

Nach einer vorteilhaften Ausführungsform erfolgt die Energiezufuhr über elektrische Widerstandsheizung. Dabei kann es sich beispielsweise um die Durchführung einer Elektrolyse handeln.

Nach einer vorteilhaften Ausführungsform erfolgt die Energiezufuhr über ein mittels Elektrizität erzeugtes Wasserstoffplasma.

Nach einer vorteilhaften Ausführungsform erfolgt die Energiezufuhr teilweise durch Einbringung von Sauerstoff zur Vergasung von der Schmelze in festem oder flüssigem Zustand zugeführtem Kohlenstoff oder von in der Schmelze gelöstem Kohlenstoff. Praktisch erfolgt das beispielsweise über Brenner oder mittels Lanzen.
Bevorzugt wird Sauerstoff eingebracht, der zumindest technisch rein ist.

Nach einer vorteilhaften Ausführungsform erfolgt die Einstellung des Kohlenstoffgehalts in der Schmelze mittels zugeführter Kohlenstoffträger.
Es kann sich um feste Kohlenstoffträger und/oder flüssige Kohlenstoffträger und/oder gasförmige Kohlenstoffträger handeln. Die Kohlenstoffträger können beispielsweise Kohlestaub, Koksgrus, Graphitstaub, oder Erdgas umfassen. Die Kohlenstoffträger können beispielsweise über Lanzen oder Unterbaddüsen eingebracht werden.

Nach einer vorteilhaften Ausführungsform erfolgt die Einstellung des Kohlenstoffgehalts in der Schmelze mittels zugeführten Sauerstoffs. Sollte der Kohlenstoffgehalt über dem gewünschten Wert für die Eisenschmelze liegen, kann durch Sauerstoffzufuhr oxidative Verminderung des Kohlenstoffgehaltes erreicht werden, beispielsweise kann Kohlenstoff in der Schmelze zu CO reagieren und gasförmig aus der Schmelze entweichen.

Nach einer vorteilhaften Ausführungsform erfolgt die Reduktion zumindest einer Teilmenge der im Eisenschwamm enthaltenen Eisenoxide
mittels zugeführter Kohlenstoffträger.
Es kann sich um feste Kohlenstoffträger und/oder flüssige Kohlenstoffträger und/oder gasförmige Kohlenstoffträger handeln. Die Kohlenstoffträger können beispielsweise Kohlestaub, Koksgrus, Graphitstaub, oder Erdgas umfassen.

Nach einer vorteilhaften Ausführungsform erfolgt die Reduktion zumindest einer Teilmenge der im Eisenschwamm enthaltenen Eisenoxide mittels im Eisenschwamm enthaltenen Kohlenstoffs.
Im Eisenschwamm kann Kohlenstoff beispielsweise in Form von Zementit (Fe3C) gebunden und/oder gelöst, und/oder als elementarer Kohlenstoff vorliegen.

Nach einer vorteilhaften Ausführungsform erfolgt die Reduktion zumindest einer Teilmenge der im Eisenschwamm enthaltenen Eisenoxide
zumindest teilweise mittels elektrischen Stroms.
Das kann beispielsweise mittels Elektrolyse oder mittels Wasserstoffplasma erfolgen.

Nach einer vorteilhaften Ausführungsform erfolgt bei der Behandlung eine Absenkung des Schmelzbereichs mittels zugeführter fester Kohlenstoffträger und/oder flüssiger Kohlenstoffträger und/oder gasförmiger Kohlenstoffträger. Dabei handelt es sich beispielsweise um Kohlestaub, Koksgrus, Graphitstaub, Erdgas. Absenkung ist zu verstehen im Vergleich zum Schmelzpunkt von Eisen. Vorzugsweise wird das erfindungsgemäße Verfahren unterhalb einer Temperatur von 1550°C betrieben, bevorzugt unterhalb einer Temperatur von 1500°C, besonders bevorzugt unterhalb einer Temperatur von 1450°C.

Ein weiterer Gegenstand der vorliegenden Anmeldung ist die Verwendung von Eisenschmelze mit einem Kohlenstoffgehalt von 1 Massen% - 5 Massen% hergestellt nach einem erfindungsgemäßen Verfahren zur Herstellung von Stahl.

Nach einer vorteilhaften Ausführungsform wird bei der Herstellung von Stahl das LD/BOF-Verfahren angewendet. Vorzugsweise erfolgt das mit einem Schrotteinsatz von zumindest 10 Massen%, bevorzugt zumindest 15 Massen%, besonders bevorzugt zumindest 20 Massen%.

Ein weiterer Gegenstand der vorliegenden Anmeldung ist eine Signalverarbeitungseinrichtung mit einem maschinenlesbaren Programmcode, der Regelbefehle zur Durchführung eines erfindungsgemäßen Verfahrens aufweist. Ein weiterer Gegenstand der vorliegenden Anmeldung ist ein maschinenlesbarer Programmcode für so eine Signalverarbeitungseinrichtung, wobei der Programmcode Regelbefehle aufweist, welche die Signalverarbeitungseinrichtung zur Durchführung eines erfindungsgemäßen Verfahrens veranlassen. Ein weiterer Gegenstand des erfindungsgemäßen Verfahrens ist ein Speichermedium mit einem darauf gespeicherten maschinenlesbaren derartigen Programmcode.

### Kurze Beschreibungen der Zeichnungen

Die Erfindung wird nun anhand von Ausführungsbeispielen näher erläutert. Die Zeichnung ist beispielhaft und soll den Erfindungsgedanken zwar darlegen, ihn aber keinesfalls einengen oder gar abschließend wiedergeben. Dabei zeigt:

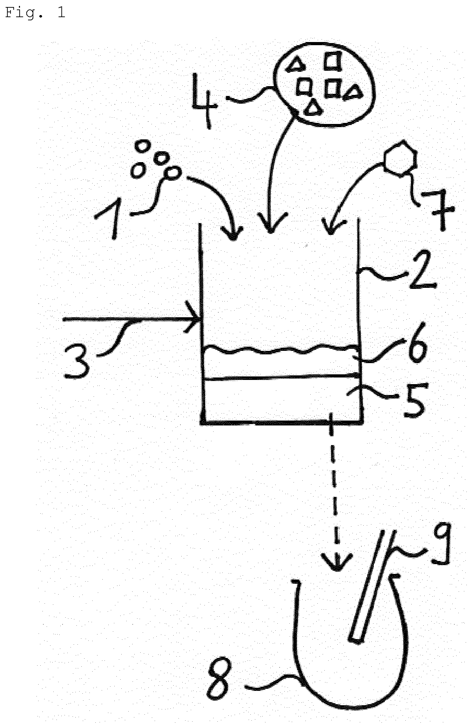

- Fig. 1: eine schematische Darstellung eines erfindungsgemäßen Verfahrensablaufes.

### Kurze Beschreibung der Ausführungsformen

### Beispiele

Figur 1 zeigt schematisch den erfindungsgemäßen Verfahrensablauf zur Herstellung einer Eisenschmelze. Eisenschwamm 1 wird einem Behandlungsreaktor 2 zugeführt. Im Behandlungsreaktor 2 wird er einer Behandlung unterworfen. Die Behandlung umfasst Energiezufuhr, die von Pfeil 3 dargestellt ist. Die Energiezufuhr erfolgt im Wesentlichen aus Elektrizität.
Die Behandlung umfasst Zugabe von Zuschlägen 4.
Bei der Behandlung werden eine Schmelze 5 und eine Schlacke 6 erzeugt. Die Schlacke weist eine Basizität B2 kleiner 1,3 auf.
Die Behandlung umfasst Einstellung des Kohlenstoffgehalts in der Schmelze 5; beispielhaft dargestellt durch Zugabe von Kohlenstoffträgern 7.
Die Behandlung umfasst Reduktion zumindest einer Teilmenge der im Eisenschwamm 1 enthaltenen Eisenoxide.
Während und/oder nach der Behandlung wird die Schlacke 6 abgetrennt, was nicht extra dargestellt ist. Die Schmelze 5 ist die angestrebte Eisenschmelze mit einem Kohlenstoffgehalt von 1 - 5 Massen%. Sie kann beispielsweise, dargestellt durch einen gestrichelten Pfeil, einem Konverter 8 zur Herstellung von Stahl nach dem LD-Verfahren mit Blaslanze 9 zugeführt werden.

Der Eisenschwamm 1 wird aus eisenoxidhaltigem Ausgangsmaterial mittels Direktreduktion mit Reduktionsgas erhalten; dabei kann das Reduktionsgas beispielsweise zu zumindest 20 Vol. % aus Wasserstoff H2 bestehen.

Die Direktreduktion erfolgt in einem Direktreduktionsreaktor und die Behandlung in einem Behandlungsreaktor 2. Direktreduktionsreaktor und Behandlungsreaktor 2 können räumlich voneinander getrennt sein, wobei der Eisenschwamm mittels einer Transportvorrichtung vom Direktreduktionsreaktor zum Behandlungsreaktor transportiert werden kann.
Eine Anordnung von Direktreduktionsreaktor und Behandlungsreaktor 2 in einer gemeinsamen Vorrichtung, also räumlich nicht voneinander getrennt direkt benachbart, ist ebenfalls möglich.

### Liste der Bezugszeichen

- 1: Eisenschwamm
- 2: Behandlungsreaktor
- 3: Energiezufuhr
- 4: Zuschläge
- 5: Schmelze
- 6: Schlacke
- 7: Kohlenstoffträger
- 8: Konverter
- 9: Blaslanze

## Patentansprüche

1. Verfahren zur Herstellung einer Eisenschmelze mit einem Kohlenstoffgehalt von 1 - 5 Massen%, wobei aus eisenoxidhaltigem Ausgangsmaterial mittels Direktreduktion mit Reduktionsgas erhaltener Eisenschwamm einer Behandlung unterworfen wird,
wobei die Behandlung umfasst:
- Energiezufuhr und Zugabe von Zuschlägen zur Erzeugung einer Schmelze und einer Schlacke, wobei die Energiezufuhr im Wesentlichen aus Elektrizität erfolgt und wobei die Schlacke eine Basizität B2 kleiner 1,3 , bevorzugt kleiner 1,25 ,
besonders bevorzugt kleiner 1,2 , aufweist,
- Einstellung des Kohlenstoffgehalts in der Schmelze,
- Reduktion zumindest einer Teilmenge der im Eisenschwamm enthaltenen Eisenoxide,
und wobei während und/oder nach der Behandlung die Schlacke abgetrennt wird.

2. Verfahren nach Anspruch 1, **dadurch gekennzeichnet, dass** die Direktreduktion mittels eines zumindest zu 20 Vol%, bevorzugt mehr als 45 Vol%, aus Wasserstoff H2 bestehenden Reduktionsgases durchgeführt wird.

3. Verfahren nach Anspruch 1 oder nach Anspruch 2, **dadurch gekennzeichnet, dass** die Direktreduktion in einem Direktreduktionsreaktor erfolgt, die Behandlung in einem Behandlungsreaktor erfolgt, und Direktreduktionsreaktor und Behandlungsreaktor räumlich voneinander getrennt sind.

4. Verfahren nach einem der Ansprüche 1 bis 3, **dadurch gekennzeichnet, dass** die Energiezufuhr über einen elektrischen Lichtbogen erfolgt.

5. Verfahren nach einem der Ansprüche 1 bis 4, **dadurch gekennzeichnet, dass** die Energiezufuhr über elektrische Widerstandsheizung erfolgt.

6. Verfahren nach einem der Ansprüche 1 bis 5, **dadurch gekennzeichnet, dass** die Energiezufuhr über ein mittels Elektrizität erzeugtes Wasserstoffplasma erfolgt.

7. Verfahren nach einem der Ansprüche 1 bis 6, **dadurch gekennzeichnet, dass** die Energiezufuhr teilweise durch Einbringung von Sauerstoff
zur Vergasung von
der Schmelze in festem oder flüssigem Zustand zugeführtem Kohlenstoff oder von in der Schmelze gelöstem Kohlenstoff erfolgt.

8. Verfahren nach einem der Ansprüche 1 bis 7, **dadurch gekennzeichnet, dass**
die Einstellung des Kohlenstoffgehalts in der Schmelze mittels zugeführter Kohlenstoffträger erfolgt.

9. Verfahren nach einem der Ansprüche 1 bis 8, **dadurch gekennzeichnet, dass**
die Einstellung des Kohlenstoffgehalts in der Schmelze mittels zugeführten Sauerstoffs erfolgt.

10. Verfahren nach einem der Ansprüche 1 bis 9, **dadurch gekennzeichnet, dass** die Reduktion zumindest einer Teilmenge der im Eisenschwamm enthaltenen Eisenoxide
mittels zugeführter Kohlenstoffträger erfolgt.

11. Verfahren nach einem der Ansprüche 1 bis 10, **dadurch gekennzeichnet, dass** die Reduktion zumindest einer Teilmenge der im Eisenschwamm enthaltenen Eisenoxide
mittels im Eisenschwamm enthaltenen Kohlenstoffs erfolgt.

12. Verfahren nach einem der Ansprüche 1 bis 11, **dadurch gekennzeichnet, dass** die Reduktion zumindest einer Teilmenge der im Eisenschwamm enthaltenen Eisenoxide
zumindest teilweise mittels elektrischen Stroms erfolgt.

13. Verfahren nach einem der Ansprüche 1 bis 12, **dadurch gekennzeichnet, dass** bei der Behandlung eine Absenkung des Schmelzbereichs mittels zugeführter fester Kohlenstoffträger und/oder flüssiger Kohlenstoffträger und/oder gasförmiger Kohlenstoffträger erfolgt.

14. Verwendung einer Eisenschmelze
mit einem Kohlenstoffgehalt von 1 Massen% - 5 Massen% hergestellt nach einem Verfahren gemäß einem der Ansprüche 1 bis 13
zur Herstellung von Stahl.

15. Verwendung nach Anspruch 14, wobei bei der Herstellung von Stahl das LD/BOF-Verfahren angewendet wird.
